(19) Europäisches Patentamt
European Patent Office
Office européen des brevets

(11) Veröffentlichungsnummer: **0 172 315**
**B1**

(12) # EUROPÄISCHE PATENTSCHRIFT

(45) Veröffentlichungstag der Patentschrift: **20.07.88**

(51) Int. Cl.⁴: **B 60 K 15/02**

(21) Anmeldenummer: **85105017.9**

(22) Anmeldetag: **25.04.85**

(54) **Anordnung eines Behälters an einem Fahrzeug.**

(30) Priorität: **03.05.84 DE 3416270**

(43) Veröffentlichungstag der Anmeldung: **26.02.86 Patentblatt 86/9**

(45) Bekanntmachung des Hinweises auf die Patenterteilung: **20.07.88 Patentblatt 88/29**

(84) Benannte Vertragsstaaten: **AT BE CH DE FR GB IT LI SE**

(56) Entgegenhaltungen:
**DE-U-1 780 496**
**FR-A-601 442**
**FR-A-624 467**
**GB-A-1 024 739**
**US-A-2 531 847**
**US-A-2 833 365**
**US-A-3 916 938**
**US-A-4 288 086**

**PATENT ABSTRACTS OF JAPAN, Band 7, Nr. 133 (M-221) 1278, 10. Juni 1983**

(73) Patentinhaber: **DEERE & COMPANY, 1 John Deere Road, Moline Illinois 61265 (US)**

(72) Erfinder: **Benning, Friedrich, Dipl.- Ing., Fliederweg 1, D-6830 Schwetzingen (DE)**

(74) Vertreter: **Feldmann, Bernhard, DEERE & COMPANY European Office, Patent Department Steubenstrasse 36- 42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 172 315 B1

LIBER, STOCKHOLM 1988

**Beschreibung**

Die erfindung betrifft eine Anordnung eines Behälters an einem Fahrzeug, der aus einer Betriebsstellung um eine Längsmittenachse eines Lagers in eine Montagestellung schwenkbar ist.

An ein Fahrzeug angebaute Behälter dienen meist dazu, Flüssigkeiten oder Gase aufzunehmen, die für den Betrieb des Fahrzeuges notwendig sind. So kann beispielsweise Schmieröl, Kühlmittel, Kraftstoff, Hydrauliköl oder für eine Bremsanlage bestimmte Druckluft in diesen gespeichert und bei Bedarf aus diesen entnommen werden. Da derartige Behälter meist schon bei dem Zusammenbau des Fahrzeuges, also an dem Montageband, mit dem darin enthaltenen Stoff für die Funktion oder die Prüfung des Fahrzeuges erforderlich sind, müssen sie oft bereits vor der Farbgebung des Fahrzeuges und bevor weitere Montagearbeiten im Bereich des Behältern abgeschlossen sind, angebracht werden. Außerdem kann es je nach Anbringungsort und Größe des Behälters vorkommen, daß dieser den Zugriff zu Wartungsteilen erschwert oder gar verhindert, was auch nach Fertigstellung des Fahrzeuges unerwüscht ist.

Es ist bereits die Anordnung eines Behälters für den Kraftstoff eines Startermotors einer Verbrennungskraftmaschine bekannt (US-PS-2 833 365). Dieser Behälter ist an einem Verkleidungsteil, der um das Lager an einer Motorhaube eines Ackerschleppers schwenkbar angeordnet ist, angebracht. Der Verkleidungsteil kann mit dem Behälter von der Verbrennungskraftmaschine weg in eine Montagestellung geschwenkt werden, um Wartungsteile montieren zu können, oder er kann auf die Verbrennungskraftmaschine zugeschwenkt und über eine Arretierung an der Motorhaube festgelegt werden, um so eine Betriebsstellung einzunehmen und in dieser während des Betriebs des Ackerschleppers zu verbleiben.

Eine derartige Anordnung eines Behälters setzt voraus, daß dieser durch bloßes Verschwenken in seine Montage- oder Betriebsstellung gebracht werden kann, was jedoch bei der Vielzahl von Einbauvarianten nicht immer möglich und auch nicht immer wünschenswert ist.

Die der Erfindung zugrunde liegende Aufgabe wird darin gesehen, die Anordnung des Behälters derart zu verbessern, daß er dem Fahrzeug gegenüber in mehrere Positionen bringbar ist, um den gegebenen örtlichen Verhältnissen besser angepaßt werden zu können.

Diese Aufgabe ist erfindungsgemäß dadurch gelöst worden, daß der Behälter in Richtung der Längsmittenachse verschiebbar angeordnet ist. Auf diese Weise kann der Behälter beim Schwenken von der Betriebsstellung in die Montagestellung oder umgekehrt in einer weiteren Richtung so verstellt werden, daß er ein größtmögliches Schwenkvermögen erfährt und nicht mit in dessen Schwenkbereich eingreifenden Leitungen, Rahmenteilen oder Halterungen kollidiert. Ferner kann er, ohne verschwenkt zu werden, bereits in eine Stellung gegenüber dem Fahrzeug gebracht werden, in der ein Zugriff zu Wartungsteilen möglich ist oder in der die Montage weiterer Komponenten vorgenommen werden kann. Insbesondere kann auf diese einfache und erfinderische Weise der Behälter, wenn er über eine Arretierung in seiner Betriebsstellung gehalten wird, dadurch in seine Montagestellung gebracht werden, daß er zum Verstellen in seine Montagestellung aus der Arretierung heraus in eine weitere Stellung verschiebbar ist. Es ist somit auf einfache Art möglich, den Behälter in Formschluß mit der Arretierung zu bringen, die nicht unbedingt aus einer speziellen Arretierungsvorrichtung zu bestehen braucht, sondern sich allein durch das Einschieben des Behälters in eine sich an dem Fahrzeug befindliche Nische ergeben kann.

Speziell bei Behältern mit einem großen Fassungsvermögen, die im leeren oder teils gefüllten Zustand von einem Monteur aufgrund ihres Gewichtes normalerweise nur sehr schwierig in die richtige Stellung zum Anbringen an das Fahrzeug gebracht werden könnten, ist es schon allein aus Sicherheitsgründen sehr vorteilhaft, wenn der Behälter in Richtung der Längsmittenachse zwangsgeführt auf dem Lager aufgehängt ist, wobei die aufgrund der Schwerkraft entstehenden Montageprobleme verringert werden, wenn erfindungsgemäß der Behälter in Richtung auf die Aufstandsebene des Fahrzeuges oder von dieser weg verschiebbar ist. Aus Montagegründen ist es besonders zweckmäßig, wenn das Lager zum Verschieben des Behälters verdrehbar ist, so daß ein preßluft- oder elektrisch angetriebenes Werkzeug wie ein Schrauber verwendet werden kann, um schnellstmöglich die Verstellung durchzuführen und dabei Montagezeiten zu kürzen, wozu erfindungsgemäß das Lager mit Gewinde versehen ist und der Behälter über ein entsprechend dazu ausgebildetes Gegengewinde an dem Lager angreift. Aus Sicherheitsgründen ist ferner gemäß der Erfindung vorgesehen, daß das Lager gegen Verdrehen sicherbar ist.

Nach einem weiteren Vorschlag der Erfindung können die vorgehend beschriebenen vorteilhaften Merkmale auch dadurch erreicht werden, daß der Behälter über einen die Schiebebewegung zulassenden Träger an dem Lager angreift, so daß eine Trennung der Funktionen Betriebsmittelspeicherung und Gewichtsaufnahme vorgenommen werden kann. So ist es auch möglich, das geeignete Material, etwa Kunststoff, für das Aufbewahren von stark aggressivem Hydrauliköl für den Behälter zu wählen, während der hohen Festigkeitsanforderungen unterliegende Träger aus einem entsprechend hochwertigen Stahl gefertigt wird. Zur Aufnahme des dem Behälter mit seinem Inhalt innewohnenden Gewichtes ist der Träger erfindungsgemäß derart ausgebildet, daß er winkelförmig mit zwei Schenkeln ausgebildet ist, wobei ein Schenkel der Verbindung mit dem Behälter selbst dient, wobei gegebenenfalls der den Behälter aufnehmende Schenkel als Verkleidung für den Behälter ausgebildet ist, was insbesondere bei Waldarbeiten wegen der zu befürchtenden Astschläge von großem Interesse ist. Überhaupt kann diese Verkleidung derart gestaltet sein, daß sie auch Gesetzesvorschriften bezüglich der Feuerbeständigkeit von Kraftstoffbehältern erfüllt. Die erfindungsgemäße Ausgestaltung derart, daß der Träger eine Wanne und einen ersten Endteil aufweist, wobei die Wanne den Behälter in sich aufnimmt, der erste Endteil über ein Führungselement an dem Lager angreift und ein zweiter Endteil vorgesehen ist, über den die Wanne mit dem Fahrzeug verbindbar ist, führt zu einem sicheren Halt des Behälters an dem Fahrzeug, wobei ein Verkanten des Führungselementes auf dem Lager dadurch verhindert wird, daß entsprechend der Erfindung das Führungselement aus einer Profilschiene mit einer Führungsbahn und einem in diese eingreifenden wahlweise an dem Fahrzeug festlegbaren Halteelement besteht. Ein sicheres Festlegen des Behälters an dem Fahrzeug unter Benutzung der erfinderischen Anordnung wird erreicht, wenn die Arretierung aus zwei Bügeln mit U-förmigem Querschnitt besteht, die ortsfest an dem Fahrzeug angreifen und in deren von zugehörigen Schenkeln umfaßten Innenraum der Behälter teilweise einschiebbar ist. In hochfunktioneller Weise wird die Verstellung des Behälters aus der Betriebsstellung in die Montagestellung erfindungsgemäß dadurch ermöglicht, daß die Profilschiene an einem oberen Ende mit einer eine Gewindebohrung aufweisenden Lasche verbunden ist, das Lager als Schraubspindel ausgebildet und in die Gewindebohrung einschraubbar ist, die Schraubspindel in Haltebügeln drehbar an dem Fahrzeug aufgehängt ist und das Halteelement aus einer Schloßschraube besteht, die mit einem kopfseitigen Ende in die Führungsbahn eingreift und mit dem gegenüberliegenden Ende an einem Winkel mittels einer Mutter festlegbar ist, wobei der Winkel über eine Schraube, deren Längsmittenachse koaxial zu der Längsmittenachse des Lagers verläuft, gegenüber dem Haltebügel verschwenkbar ist.

Die erfindungsgemäße Anordnung eines Behälters fällt speziell dann in ein reichhaltiges Anwendungsgebiet, wenn der Behälter ein Zusatzkraftstoffbehälter zu einem Hauptkraftstoffbehälter ist und mit diesem ständig in Reihe geschaltet ist, wobei gegebenenfalls der Zusatzkraftstoffbehälter über den Hauptkraftstoffbehälter befüllbar ist und/oder der Hauptkraftstoffbehälter über den Zusatzkraftstoffbehälter entleerbar ist. Um einer das Fahrzeug bedienenden Person auf übersichtliche Art mitzuteilen, wieviel Kraftstoff insgesamt sowohl in dem Hauptkraftstoffbehälter als auch dem Zusatzkraftstoffbehälter vorhanden ist, ist erfindungsgemäß vorgesehen, daß der Zusatzkraftstoffbehälter einen Tankgeber mit einem elektrischen Widerstand und der Hauptkraftstoffbehälter einen Tankgeber mit einem anderen elektrischen Widerstand aufweist. So kann der Tankgeber des Hauptkraftstoffbehälters den Tankinhalt auf einem Tankanzeiger zwischen "Voll" und "Reserve" regeln, während der Tankgeber des Zusatzkraftstoffbehälters sich nur auf den Bereich zwischen "Reserve" und "Leer" auswirkt.

Ein Teil der vorgenannten Erfindungsmerkmale läßt sich ohne zusätzliche technische Hilfsmittel dadurch erreichen, daß der Zusatzkraftstoffbehälter unterhalb des Hauptkraftstoffbehälters angeordnet ist, da beispielsweise beim Befüllen des Hauptkraftstoffbehälters der Kraftstoff allein aufgrund der Schwerkraft auf diesem in den Zusatzkraftstoffbehälter weiterfließt und es dazu keiner weiteren Kraftstofförderpumpe bedarf.

In der Zeichnung ist ein nachfolgend näher beschriebenes Ausführungsbeispiel der Erfindung dargestellt. Es zeigt:

Fig. 1 einen Ackerschlepper in Seitenansicht und im Bereich eines Hinterrades aufgebrochen,

Fig. 2 einen Zusatzkraftstoffbehälter mit einem vorderen und einem rückwärtigen Rahmenteil und einer Schutzwanne und

Fig. 3 einen Einspritzkreislauf des Ackerschleppers in schematischer Darstellung

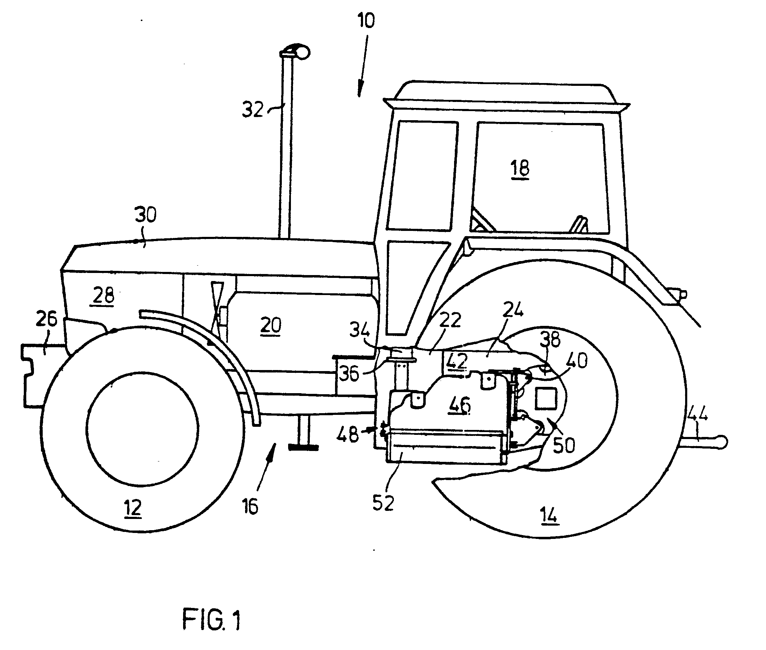

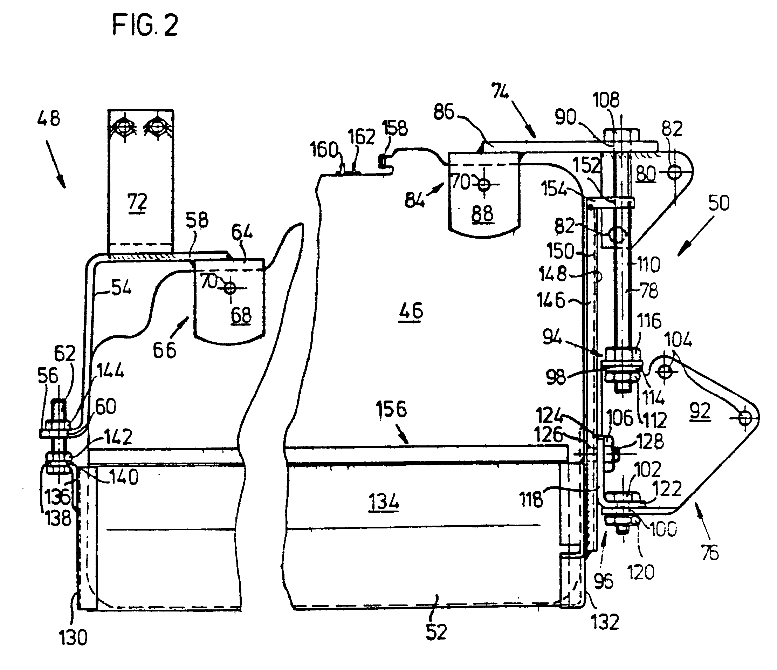

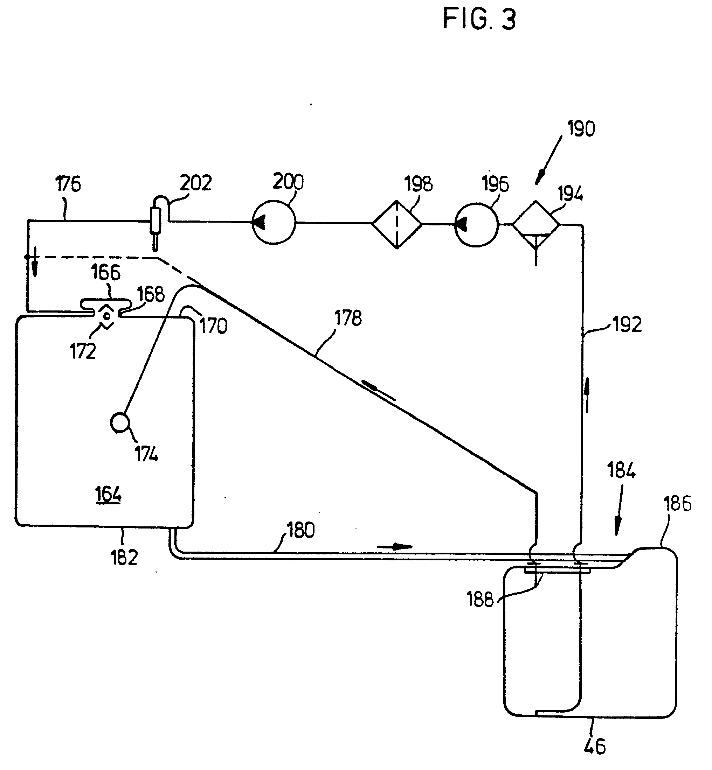

Ein Fahrzeug in der Form eines Ackerschlepper 10 weist gemäß Fig. 1 ein auf Vorderrädern 12 und Hinterrädern 14 getragenes Fahrgestell 16 auf, auf welches im rückwärtigen Bereich, der in der Fig. 1 rechts gelegen ist, eine Fahrerkabine 18 aufmontiert ist. Die im folgenden verwendeten Begriffe oben und unten verstehen sich mit Blick auf die Zeichnung, die Begriffe links und rechts mit Blick auf die Zeichnung und gegebenenfalls in bezug auf die Vorwärtsfahrtrichtung des Ackerschleppers, während sich die Begriffe vorne, hinten und rückwärtig nur an der Vorwärtsfahrtrichtung orientieren. Das Fahrgestell 16 besteht im wesentlichen aus einem nicht gezeichneten Vorderachsbock, der eine die Vorderräder 12 tragende Vorderachse pendelnd aufnimmt, einem Motor 20, einem Kupplungsgehäuse 22 und einem Getriebegehäuse 24. An dem Vorderachsbock sind Ballastgewichte 26 angebracht, und oberhalb dessen erstreckt sich ein Haubenvorderteil 28, der einen lediglich in Fig. 3 schematisch gezeigten Hauptkraftstoffbehälter 164 umgibt. Zwischen diesem Hauptkraftstoffbehälter 164 und der Fahrerkabine 18 ist der Motor 20 gelegen, von dem aus sich nach oben durch eine Haube 30 ein Abgasrohr 32 erstreckte. Die Fahrerkabine 18 ist über mehrere Gummilager 34, von denen in Fig. 1 nur eines ersichtlich ist, auf dem Fahrgestell 16 abgestützt. Das gezeigte Gummilager 34 ist auf einen Halter 36 aufgesetzt, der wiederum an dem Kupplungsgehäuse 22 angeschraubt ist. Ein Achstrichter 38, der der drehbaren Aufnahme einer nicht gezeichneten Welle für das zugehörige Hinterrad 14 dient, ist mittels mehrerer auf einem Lochkreis am Rand des Achstrichters gelegener Schrauben 40 an die zugehörige Seitenfläche 42 des Getriebegehäuses 24 angeflanscht. Ferner erstrecken sich von dem rückwärtigen unteren Bereich des Getriebegehäuses 24 untere Lenker 44 fort, um gegebenenfalls mit einem Arbeitsgerät verbunden werden zu können. Schließlich ist Fig. 1 noch die Anordnung eines Zusatzkraftstoffbehälters 46 zu entnehmen, der über einen vorderen Rahmenteil 48, einen rückwärtigen schwenkbaren Rahmenteil 50 und über eine Schutzwanne 52 gehalten wird. Dabei ist der vordere Rahmenteil 48 an den Halter 36 für das Gummilager 34 angeschraubt, während der rückwärtige Rahmenteil 50 über die den Achstrichter 38 an dem Getriebegehäuse 24 befestigenden Schrauben 40 gehalten wird, so daß sich der Zusatzkraftstoffbehälter 46 links entlang des Kupplungsgehäuses 22 und eines Teils des Getriebegehäuses 24 erstreckt. Zur Erläuterung des genauen Aufbaues des vorderen und des rückwärtigen Rahmenteils 48 und 50 mit der Schutzwanne 52 wird im folgenden auf Fig. 2 verwiesen.

Der vordere Rahmenteil 48 besteht aus einem in einer Ebene zweifach gegensinnig gekröpften Flachstahl 54 mit einem kurzen unteren und einem langen oberen Schenkel 56 und 58, wobei in den kurzen unteren Schenkel 56 eine Bohrung 60 für eine Schraube 62 eingearbeitet ist. Im Endbereich des oberen Schenkels 58 ist quer zu dem Flachstahl 54 ein Steg 64 eines einer Arretierung zugehörigen U-förmigen Bügels 66 angeschweißt, während daran anschließende sich in Fahrtrichtung erstreckende Schenkel 68, von denen der in Vorwärtsfahrtrichtung rechts gelegene verdeckt ist, den Zusatzkraftstoffbehälter 46 zu jeder Seite übergreifen können. Der in Vorwärtsfahrtrichtung links gelegene Schenkel 68 ist mit einer Gewindebohrung 70 versehen, durch welche eine in die Zeichnung nicht aufgenommene Schraube für ein gleichfalls nicht gezeigtes Schutzblech hindurchgesteckt werden kann. Von dem oberen Schenkel 58 des Flachstahls 54 steht nach oben eine Lasche 72 ab, über welche der vordere Rahmenteil 48 an dem Gummilager 34 mittels nicht dargestellter Schrauben befestigt wird.

Der rückwärtige Rahmenteil 50 setzt sich hauptsächlich aus einem Oberteil 74, einem Unterteil 76 und einer als Lager dienenden Verstellschraube 78 zusammen, die sich zwischen beiden erstreckt. Der Oberteil 74 weist eine etwa dreiecksförmige Platte 80 mit zwei Löchern 82 auf, durch welche sich die entsprechenden Schrauben 40 zur Befestigung des Achstrichters 38 erstrecken können. Rechtwinklig an diese Platte 80 ist ebenfalls ein mit einem U-förmigen Bügel 84 in gleicher Art versehener Flachstahl 86 angeschweißt, der in Richtung auf den vorderen Rahmenteil 48 zeigt und gleichfalls zu der Arretierung gehört. Der Bügel 84 übergreift in gleicher Weise mit zwei Schenkeln 88, von denen nur einer zu sehen ist, den Zusatzkraftstoffbehälter 46 und ist hierzu nach unten offen. Der dem Getriebegehäuse 24 abgewandte Schenkel 88 des Bügels 84 ist wiederum durchbohrt, um eine nicht dargestellte Schraube zum Anbringen des vorerwähnten Schutzbleches aufnehmen zu können. Der Flachstahl 86 ist in seinem Endbereich, in dem er mit der Platte 80 verschweißt ist, mit einer Bohrung 90 versehen, durch welche die Verstellschraube 78 hindurchgesteckt werden kann, wie dies später noch beschrieben wird. Die Platte 80 liegt im montierten Zustand mit ihrer dem Getriebegehäuse 24 zugewandten Seite an dem Achstrichter 38 an.

Der Unterteil 76 ist ebenfalls aus einer Platte 92 gebildet, die oben und unten rechtwinklig von dem Getriebegehäuse 24 weg abgebogen ist, um ein oberes und ein unteres Schwenklager 94 und 96 zu bilden, die wiederum jeweils von einer Bohrung 98 und 100 durchdrungen sind, wobei das obere Schwenklager 94 der Aufnahme der Verstellschraube 78 und das untere Schwenklager 96 der Aufnahme einer Schraube 102 dient. Der Flachstahl 86 und das obere Schwenklager 94 dienen demgemäß als Haltebügel für die Verstellschraube 78. Die Platte 92 selbst weist ebenfalls zwei Löcher 104 auf, die wie auch die Löcher 82 in der Platte 80 so angeordnet sind, daß sie mit entsprechenden in der Zeichnung nicht erkenntlichen Befestigungsbohrungen in dem Achstrichter 38 fluchten und daß die entsprechenden Schrauben 40 zum Befestigen des Achstrichters 38 hindurchgesteckt werden können. Die in beiden Platten 80, 92 eingebrachten Löcher 82, 104 liegen alle auf dem Lochkreis der Befestigungsbohrungen des Achstrichters 38, in denen die Schrauben 40 aufgenommen werden. Im montierten Zustand liegt auch die Platte 92 des Unterteils 76 mit ihrer dem Getriebegehäuse 24 zugewandten Seite an dem Achstrichter 38 an. Die beiden Platten 80, 92 werden derart an dem Achstrichter 38 angebracht, daß im angebauten Zustand die Mittelpunkte der Bohrung 90 in dem Flachstahl 86 des Oberteils 74, der Bohrung 98 des oberen Schwenklagers 94 und der Bohrung 100 des unteren Schwenklagers 96 auf einer Linie liegen.

Die Verstellschraube 78 ist eine Sechskantschraube mit durchgehendem Gewinde, deren Länge sich nach dem Abstand zwischen dem oberen Schwenklager 94 und der Flachstahlplatte 86 des Oberteile 74 bemißt. Sie ist mindestens so lange auszubilden, daß, wenn sie durch die Bohrung 90 in dem Flachstahl 86 des Oberteils 74 gesteckt worden ist und deren Schraubenkopf 108 auf diesem aufsitzt, ihr Gewindeschaft 110 mindestens um die Höhe einer selbstsichernden Mutter 112 und einer Scheibe 114 über die Unterseite des oberen Schwenklagers 94 übersteht. Auf den Gewindeschaft 110 ist eine weitere Mutter 116 aufgeschraubt, die im montierten Zustand oberhalb des oberen Schwenklagers 94 zu liegen kommt.

Die in das untere Schwenklager 96 eingesetzte Schraube 102 verbindet einen Winkel 118 mit zwei Schenkeln 122, 124 schwenkbar mit dem unteren Schwenklager 96, wobei der eine Schenkel 122 von der Schraube 102 durchdrungen wird, die auf der Unterseite des unteren Schwenklagers 96 von einer selbstsichernden Mutter 120 gehalten wird. Der andere Schenkel 124 des aus Flacheisen gebogenen Winkels 118 ist ebenfalls mit einer Bohrung 126 versehen, in der eine als Halteelement dienende Schloßschraube 128 aufgenommen ist.

Die Schutzwanne 52 ist dreiteilig aufgebaut und besteht aus einem linken Endteil 130, einem rechten Endteil 132 und einem zwischen diese eingesetzten Wannenelement 134. Die beiden Endteile 130, 132 sind jeweils umgebördelt, um einen Anschluß für das Wannenelement 134 zu bilden, und an den sich überlappenden Stellen entweder miteinander punktverschweißt oder miteinander verlötet. Auf den linken Endteil 130 ist ein Haltewinkel 136 aufgesetzt und angeschweißt oder angeschraubt, der einen waagrechten oberen Schenkel 138 aufweist, der parallel zu dem unteren kurzen Schenkel 56 des vorderen Rahmenteils 48 verläuft und eine mit der Bohrung 60 in dem unteren kurzen Schenkel 56 fluchtende Bohrung 140 zur Aufnahme der Schraube 62 enthält. Diese Schraube 62 wird von unten durch die Bohrung 140 in dem Haltewinkel 136 geführt und mit einer Mutter 142 gekontert, so daß sie sich beim Aufschrauben einer weiteren Mutter 144 zum Anschrauben an den vorderen Rahmenteil 48 nicht verdrehen kann und nicht verlorengeht, wenn die Schutzwanne 52 nicht an den vorderen Rahmenteil 48 angeschraubt ist.

An den rechten Endteil 132 ist ein Vierkantrohr 146 angeschweißt, dessen Längsachse parallel zu der Längsachse der Verstellschraube 78 verläuft und auf einer dieser zugewandten Seite 148 durch einen Längsschlitz 150, der sich über die gesamte Länge des Vierkantrohrs 146 erstreckt, aufgebrochen ist. Das Vierkantrohr 146 dient als Führungselement und kann der Gestalt wegen auch als Profilschiene bezeichnet werden. Es wird an seiner Oberseite mit einer mit einer Gewindebohrung 152 versehenen aufgeschweißten Lasche 154 verschlossen, die sich zwischen dem Vierkantrohr 146 und der Verstellschraube 78 erstreckt, wobei die Verstellschraube 78 in die Gewindebohrung 152 einschraubbar ist. Der Längsschlitz 150 bildet eine Führungsbahn und wird zur gleitenden Aufnahme der Schloßschraube 128 benutzt, deren abgerundeter in der Zeichnung nicht erkennbarer Kopf im Innenraum des Vierkantrohrs 146 und der unter dem Kopf angebrachte ebenfalls nicht gezeigte Vierkant in dem Längsschlitz 150 zu liegen kommt, so daß der an der Außenseite der mit dem Längsschlitz 150 versehenen Seite 148 des Vierkantrohres 146 anliegende Winkel 118 über die Schloßschraube 128 und eine Mutter 106 ortsfest mit dem Vierkantrohr 146 verklemmt werden kann. Es kann jedoch auch eine andere Art der Führung wie etwa eine Stange und ein diese übergreifender Klemmteil oder ein I-Profil mit dieses überlappenden Krallen Verwendung finden. Die Schloßschraube 128 kann an dem offenen unteren Ende des Vierkantrohres 146 in den Längsschlitz 150 eingeführt werden. Ist die Schloßschraube 128 gelöst, dann kann bei Drehen der Verstellschraube 78 das Vierkantrohr 146 und damit auch die Schutzwanne 52 gegenüber dem rückwärtigen Rahmenteil 50 eine Relativbewegung ausführen, die den Zusatzkraftstoffbehälter 46 von den Bügeln 66, 84 weg oder auf diese zu bewegt und ihn somit außer oder in Eingriff mit diesen bringt.

Das Wannenelement 134 wird aus einer mehrfach geknickten Blechtafel hergestellt und ist an seinen oberen Endbereichen 156 jeweils gefalzt, um das vorerwähnte Schutzblech formschlüssig aufnehmen zu können. Sowohl das Schutzblech wie auch das Wannenelement 134 sind aus ca. 3 mm starkem Stahlblech gebildet, um somit einen wirksamen Schutz des Zusatzkraftstoffbehälters 46 gegen Krafteinwirkung von außen, beispielsweise durch Astschläge bei Arbeiten im Wald, zu bilden. Schematisch betrachtet stellen der rechte Endteil 132, das Wannenelement 134 und das Vierkantrohr 146 einen zweischenkligen Träger dar, wobei der eine Schenkel aus dem Vierkantrohr 146 und dem rechten Endteil 132 besteht und an der Verstellschraube 78 angreift, während der andere Schenkel aus dem Wannenelement 134 gebildet wird.

Der Zusatzkraftztoffbehälter 46 ist als Kunststofftank ausgebildet, der in seiner äußeren Formgebung den örtlichen Verhältnissen im Anbaubereich an dem Getriebegehäuse 24 und dem Kupplungsgehäuse 22 angepaßt werden kann und der formschlüssig von den beiden Bügeln 66, 84 und der Schutzwanne 52 im montierten Zustand gehalten wird. Insbesondere kann er Ausbuchtungen und Vorsprünge aufweisen, die einen Anbau von Rahmenteilen oder Aggregaten, die normalerweise in den Bereich des Zusatzkraftstoffbehälters eindringen würden, gestatten. Er ist mit einem Versorgungsleitungsstutzen 158, einem Be- und Entlüftungsleitungsstutzen 160 und einem Kraftstoffleitungsstutzen 162 versehen, die eine Verbindung zu einem in Fig. 3 schematisch dargestellten Einspritzaggregat 190 und dem Hauptkraftstoffbehälter 164 ermöglichen.

Aus Fig. 3 geht in schematischer Darstellung die Anordnung und die Verbindung des Hauptkraftstoffbehälters 164 mit dem Zusatzkraftstoffbehälter 46 hervor. So ist im Anbauzustand wie gezeigt der Hauptkraftstoffbehälter 164 oberhalb des Zusatzkraftstoffbehälters 46 angeordnet und in herkömmlicher Weise mit einem einen Tankdeckel 166 aufnehmenden Einfüllstutzen 168 an seiner Oberseite 170 versehen, wobei der Tankdeckel 166 ein Be- und Entlüftungsventil 172 aufweist, so daß sich beim Absaugen von Kraftstoff aus dem Hauptkraftstoffbehälter 164 kein Vakuum darin bilden kann und daß über dieses ein sich beispielsweise aufgrund von übermäßiger Sonneneinstrahlung aufbauender Überdruck abgebaut werden kann. Ferner ist ungefähr auf seiner halben Höhe ein elektrisch arbeitender Tankgeber 174 mit einem elektrischen Widerstandswert X eingebaut, der einen Meßwert an eine in der Fahrerkabine 18 angebrachte nicht gezeigte Tankanzeige weitergibt. Schließlich mündet in der Höhe des Einfüllstutzens 168 eine Rücklaufleitung 176 und in Höhe des Tankgebers 174 eine Entlüftungsleitung 178 in den Hauptkraftstoffbehälter 164, während eine relativ großdimensionierte Versorgungsleitung 180 an einem Bodenteil 182 austritt.

Der Zusatzkraftstoffbehälter 46 ist an seiner Oberseite 184 mit einer Erhebung 186 versehen, in die die von dem Hauptkraftstoffbehälter 164 kommende Versorgungsleitung 180 über den Versorgungsleitungsstutzen 158 einmündet. An der Oberseite 184 ist außerdem ein weiterer elektrisch arbeitender Tankgeber 188 angebracht, der einen elektrischen Widerstand Y innehat und der Meßwerte an die gleiche Tankanzeige weiterleitet. Der elektrische Widerstand X ist unterschiedlich zu dem elektrischen Widerstand Y. Im Bereich des Tankgebers 188 schließen die zum Hauptkraftstoffbehälter 164 führende mit stetiger Steigung verlaufende Entlüftungsleitung 178 und eine zu dem Einspritzaggregat 190 führende Kraftstoffleitung 192 an den Zusatzkraftstoffbehälter 46 über den Entlüftungsleitungsstutzen 160 bzw. über den Kraftstoffleitungsstutzen 162 an. Je nach Ausbildung des Hauptkraftstoffbehälters 164 kann die Entlüftungsleitung 178 auch mit der Rücklaufleitung 176 vor deren Eintritt in den Einfüllstutzen 168 verbunden werden, anstatt in Höhe des Tankgebers 174 in den Hauptkraftstoffbehälter einzutreten. Das Einspritzaggregat 190 setzt sich aus einem eingangsseitig mit der Kraftstoffleitung 192 verbundenen Wasserabscheider 194 und daran anschließend einer Kraftstofförderpumpe 196, einem Kraftstoffilter 198, einer Einspritzpumpe 200 und Einspritzdüsen 202 zusammen, von denen nicht verbrauchter Kraftstoff über die Rücklaufleitung 176 dem Hauptkraftstoffbehälter 164 wieder zugeführt wird.

Der Befüll- und Entleervorgang des Haupt- und Zusatzkraftstoffbehälters geschieht wie folgt. Der Kraftstoff wird zum Befüllen zunächst über den Einfüllstutzen 168 in den Hauptkraftstoffbehälter 164 eingefüllt und fließt direkt über die Versorgungsleitung 180 in den Zusatzkraftstoffbehälter 46 weiter, wobei in letzterem sich befindliche Luft über die Entlüftungsleitung 178 in den Hauptkraftstoffbehälter 164 und über das Be- und Entlüftungsventil 172 ins Freie abströmen kann. Der Querschnitt der Versorgungsleitung 180 ist dabei so groß gewählt, daß der Kraftstoff schnellstmöglich in den Zusatzkraftstoffbehälter 46 abfließen kann und diesen auffüllt, bevor der Kraftstoffpegel im Hauptkraftstoffbehälter 164 an die Mündung der Entlüftungsleitung 178 gelangt, so daß eine Entlüftung des Zusatzkraftstoffbehälters 46 nicht durch an der Mündung der Entlüftungsleitung 178 in dem Hauptkraftstoffbehälter 164 anstehenden Kraftstoff verhindert wird. Kraftstoff kann so lange eingefüllt werden, bis der Hauptkraftstoffbehälter 164 vollkommen aufgefüllt ist. Auch wenn der Zusatzkraftstoffbehälter 46 bereits gefüllt ist und Kraftstoff nur noch in den Hauptkraftstoffbehälter 164 fließt, erfolgt die Entlüftung weiterhin über das Be- und Entlüftungsventil 172. Wird der Motor 20 des Ackerschleppers 10 in Betrieb gesetzt, dann saugt die Kraftstofförderpumpe 196 über die Kraftstoffleitung 192 und den Wasserabscheider 194 Kraftstoff zunächst aus dem Zusatzkraftstoffbehälter 46 an und fördert ihn über den Kraftstoffilter 198 zu der Einspritzpumpe 200, die damit die Einspritzdüsen 202 versorgt. Von den Einspritzdüsen 202 nicht in die Verbrennungsräume des Motors 20 eingespritzter Kraftstoff wird über die Rücklaufleitung 176 wieder dem Hauptkraftstoffbehälter 164 eingegeben, damit er über den Zusatzkraftstoffbehälter 46 wieder in den Einspritzkreislauf eingespeist werden kann. Es erfolgt demgemäß ein ständiger Kraftstoffumlauf, so daß sich in keinem der Kraftstoffbehälter 46, 164 Kraftstoff über längere Zeit hinweg ansammeln kann.

Die Anzeige des Tankinhalts mittels der Tankanzeige erfolgt derart, daß aufgrund seines elektrischen Widerstandswertes der Tankgeber 174 des Hauptkraftstoffbehälter 164 eine Anzeige zwischen "Voll" und "Reserve" erbringt, während der Tankgeber 188 des Zusatzkraftstoffbehälters 46 die Anzeige zwischen "Reserve" und "Leer" regelt.

Der Einbau des Zusatzkraftstoffbehälters 46 geschieht wie folgt. Ausgehend davon, daß der vordere Rahmenteil 48 an dem Halter 36 des Gummilagers 34 der Fahrerkabine 18 und der rückwärtige Rahmenteil 50 an dem Achstrichter 38 angebaut sind, wird die Schutzwanne 52 in eine Stellung gebracht, in der die Gewindebohrung 152 der Lasche 154 in einer Flucht mit der Bohrung 90 in dem Flachstahl 86 des Oberteils 74 und der Bohrung 98 in dem oberen Schwenklager 94 liegt. Anschließend wird die Verstellschraube 78 durch die Bohrung 90 in dem Flachstahl 86 des Oberteils 74 gesteckt, in die Gewindebohrung 152 eingeschraubt und so lange gedreht, bis sie ca. 40 mm auf der anderen Seite der Lasche 154 übersteht. Danach wird die weitere Mutter 116 auf die Verstellschraube 78 aufgeschraubt, bis sie an die Unterseite der Lasche 154 anschlägt, und die Verstellschraube 78 in die Bohrung 98 des oberen Schwenklagers 94 eingeführt, bis deren Schraubenkopf 108 an der Oberseite des Flachstahls 86 des Oberteils 74 zur Anlage kommt. Danach wird die Scheibe 114 mittels der selbstsichernden Mutter 112 auf der Verstellschraube gegen die Unterseite des oberen Schwenklagers 94 zur Anlage gebracht, so daß die Verstellschraube 78 ohne größeren Kraftaufwand noch gedreht werden kann. Weiterhin wird der Winkel 118 mittels der Schloßschraube 128 an das Vierkantrohr 146 angelegt und mit der Mutter 106 gesichert, so daß eine Relativbewegung zwischen dem Winkel 118 und dem Vierkantrohr 146 möglich ist, und der Winkel 118 auf die Oberseite des unteren Schwenklagers 96 aufgesetzt und mit der Schraube 102 gesichert, wobei die selbstsichernde Mutter 120 so weit angezogen wird, daß der Winkel 118 gerade noch auf dem unteren Schwenklager 96 bewegt werden kann. In diesem Einbauzustand kann die gesamte Schutzwanne 52 noch um die Schraube 102 und die Verstellschraube 78 geschwenkt werden, um so entweder eine Betriebsstellung oder eine dem Getriebegehäuse 24 abgelegene Montagestellung, in der der von dem Zusatzkraftstoffbehälter 46 verdeckte Bereich des Getriebegehäuses 24 und des Kupplungsgehäuses 22 lackiert werden kann, einnehmen zu können. Die Entlüftungsleitung 178, die Versorgungsleitung 180 und die Kraftstoffleitung 192 sind dementsprechend flexibel und ausreichend lang ausgebildet, so daß sie einer Schwenkbewegung des Zusatzkraftstoffbehälters 46 nicht im Wege stehen.

Sodann wird die Schutzwanne 52 in die Montagestellung gebracht, der Zusatzkraftstoffbehälter 46 in diese eingesetzt und auf das Getriebegehäuse 24 in die Betriebsstellung zugeschwenkt, so daß er unterhalb der beiden Bügel 66, 84 zu liegen kommt und die beiden Bohrungen 60, 140 in dem kurzen unteren Schenkel 56 des vorderen Rahmenteiles 48 und in dem Haltewinkel 136 miteinander fluchten. Um den Zusatzkraftstoffbehälter 46 in Eingriff mit den Bügeln 66, 84 zu bringen, wird anschließend die Verstellschraube 78 gedreht, was gegebenenfalls unter Zuhilfenahme eines druckluftangetriebenen Schraubers erfolgen kann, damit die Schutzwanne 52 über das Vierkantrohr 146, die Lasche 154 und die formschlüssige Gewindeverbindung der Gewindebohrung 152 mit der Verstellschraube 78 auf die Bügel 66, 84 zubewegt wird. Während dieses Bewegungsvorganges gelangt die Schraube 62 in Eingriff mit der Bohrung 60 in dem kurzen unteren Schenkel 56 des vorderen Rahmenteils 48, und die Schloßschraube 128 gleitet in dem Längsschlitz 150 entlang. Der Verstellvorgang ist dann beendet, wenn der Zusatzkraftstoffbehälter 46 fest in den Bügeln 66, 84 zur Anlage gekommen ist und die Verstellschraube 78 nicht mehr weiter gedreht werden kann. Zur Sicherung des Zusatzkraftstoffbehälters 46 in der Betriebsstellung wird abschließend die Schraube 62 mit der weiteren Mutter 144 in dem vorderen Rahmenteil 48 gesichert und somit die Schutzwanne 52 nach oben angedrückt, so daß der Zusatzkraftstoffbehälter 46 fest in dem Bügel 66 des vorderen Rahmenteils 48 anliegt, und die Verstellschraube 78 wird durch Anlegen der weiteren Mutter 116 an die Oberseite des oberen Schwenklagers 94 gekontert, so daß ein Lösen und ein somit bedingtes evtl. Nachuntenbewegender Schutzwanne 52 vermieden wird. Zuletzt wird noch die Schloßschraube 128 mittels der Mutter 106 angezogen, wodurch das Vierkantrohr 146 und die Schutzwanne 52 eine feste Verbindung mit dem rückwärtigen Rahmenteil 50 eingehen. Je nach den Einsatzverhältnissen kann das vorerwähnte Schutzblech noch mittels der die Bohrungen 70 in den Bügeln 66, 84 durchdringenden Schrauben angebracht werden.

## Patentansprüche

1. Anordnung eines Behälters an einem Fahrzeug, der aus einer Betriebsstellung um eine Längsmittenachse eines Lagers (78) in eine Montagestellung schwenkbar ist, dadurch gekennzeichnet, daß der Behälter (46) in Richtung der Längsmittenachse verschiebbar angeordnet ist.

2. Anordnung eines Behälters nach Anspruch 1, wobei der Behälter (46) über eine Arretierung (66, 84) in seiner Betriebsstellung gehalten wird, dadurch gekennzeichnet, daß der Behälter (46) zum Verstellen in seine Montagestellung aus der Arretierung (66, 84) heraus in eine weitere Stellung verschiebbar ist.

3. Anordnung eines Behälters nach Anspruch 1 oder 2, dadurch gekennzeichnet, daß der Behälter (46) in Richtung der Längsmittenachse zwangsgeführt auf dem Lager (78) aufgehängt ist.

4. Anordnung eines Behälters nach einem oder mehreren der vorherigen Ansprüche, dadurch gekennzeichnet, daß der Behälter (46) in Richtung auf die Aufstandsebene des Fahrzeuges (10) oder von dieser weg verschiebbar ist.

5. Anordnung eines Behälters nach einem oder mehreren der vorherigen Ansprüche, dadurch gekennzeichnet, daß das Lager (78) zum Verschieben des Behälters (46) verdrehbar ist.

6. Anordnung eines Behälters nach einem oder mehreren der vorherigen Ansprüche, dadurch gekennzeichnet, daß das Lager (78) mit Gewinde (110) versehen ist und der Behälter (46) über ein entsprechend dazu ausgebildetes Gegengewinde an dem Lager (78) angreift.

7. Anordnung eines Behälters nach einem oder mehreren der vorherigen Ansprüche, dadurch gekennzeichnet, daß das Lager (78) gegen Verdrehen sicherbar ist.

8. Anordnung eines Behälters nach einem oder mehreren der vorherigen Ansprüche, dadurch gekennzeichnet, daß der Behälter (46) über einen die Schiebebewegung zulassenden Träger (132, 134, 146, 52) an dem Lager (78) angreift.

9. Anordnung eines Behälters nach einem oder mehreren der vorherigen Ansprüche, dadurch gekennzeichnet, daß der Träger (132, 134, 146, 52) winkelförmig mit zwei Schenkeln (134, 132, 146) ausgebildet ist, wobei ein Schenkel (134) der Verbindung mit dem Behälter (46) selbst dient.

10. Anordnung eines Behälters nach einem oder mehreren der vorherigen Ansprüche, dadurch gekennzeichnet, daß der den Behälter (46) aufnehmende Schenkel (134) als Verkleidung für den Behälter (46) ausgebildet ist.

11. Anordnung eines Behälters nach einem oder mehreren der vorherigen Ansprüche, dadurch gekennzeichnet, daß der Träger (132, 134, 146, 52) eine Wanne (134) und einen ersten Endteil (132) aufweist, wobei die Wanne (134) den Behälter (46) in sich aufnimmt, der erste Endteil (132) über ein Führungselement (146) an dem Lager (78) angreift und ein zweiter Endteil (130) vorgesehen ist, über den die Wanne (134) mit dem Fahrzeug (10) verbindbar ist.

12. Anordnung eines Behälters nach einem oder mehreren der vorherigen Ansprüche, dadurch gekennzeichnet, daß das Führungselement (146) aus einer Profilschiene (146) mit einer Führungsbahn (150) und einem in diese eingreifenden wahlweise an dem Fahrzeug (10) festlegbaren Halteelement (128) besteht.

13. Anordnung eines Behälters nach einem oder mehreren der vorherigen Ansprüche, dadurch gekennzeichnet, daß die Arretierung (66, 84) aus zwei Bügeln (66, 84) mit U-förmigem Querschnitt besteht, die ortsfest an dem Fahrzeug (10) angreifen und in deren von zugehörigen Schenkeln (68, 88) umfaßten Innenraum der Behälter (46) teilweise einschiebbar ist.

14. Anordnung eines Behälters nach einem oder mehreren der vorherigen Ansprüche, dadurch gekennzeichnet, daß die Profilschiene (146) an einem überen Ende mit einer eine Gewindebohrung (152) aufweisenden Lasche (54) verbunden ist, das Lager (78) als Schraubspindel ausgebildet und in die Gewindebohrung (152) einschraubbar ist, die Schraubspindel (78) in Haltebügeln (86, 94) drehbar an dem Fahrzeug (10) aufgehängt ist und das Halteelement (128) aus einer Schloßschraube besteht, die mit einem kopfseitigen Ende in die Führungsbahn (150) eingreift und mit dem gegenüberliegenden Ende an einem Winkel (118) mittels einer Mutter (106) festlegbar ist, wobei der Winkel (118) über eine Schraube (102), deren Längsmittenachse koaxial zu der Längsmittenachse des Lagers (78) verläuft, gegenüber dem Haltebügel (86, 94) verschwenkbar ist.

15. Anordnung eines Behälters nach einem oder mehreren der vorherigen Ansprüche, dadurch gekennzeichnet, daß der Behälter (46) ein Zusatzkraftstoffbehälter zu einem Hauptkraftstoffbehälter (164) ist und mit diesem ständig in Reihe geschaltet ist.

16. Anordnung eines Behälters nach einem oder mehreren der vorherigen Ansprüche, dadurch gekennzeichnet, daß der Zusatzkraftstoffbehälter (46) über den Hauptkraftstoffbehälter (164) befüllbar ist.

17. Anordnung eines Behälters nach einem oder mehreren der vorherigen Ansprüche, dadurch gekennzeichnet, daß der Hauptkraftstoffbehälter (164) über den Zusatzkraftstoffbehälter (46) entleerbar ist.

18. Anordnung eines Behälters nach einem oder mehreren der vorherigen Ansprüche, dadurch gekennzeichnet, daß der Zusatzkraftstoffbehälter (46) einen Tankgeber (188) mit einem elektrischen Widerstand und der Hauptkraftstoffbehälter (164) einen Tankgeber (174) mit einem anderen elektrischen Widerstand aufweist.

19. Anordnung eines Behälters nach einem oder mehreren der vorherigen Ansprüche, dadurch gekennzeichnet, daß der Zusatzkraftstoffbehälter (46) unterhalb des Hauptkraftstoffbehälters (164) angeordnet ist.

**Claims**

1. Arrangement of a reservoir on a vehicle, which is swingable about a longitudinal central axis of a pivot (78) from a working position into a mounting position, characterised in that the reservoior (46) is arranged slidably in the direction of the longitudinal central axis.

2. Arrangement of a reservoir according to claim 1, wherein the reservoir (46) is retained in its working position by a latch (66, 84), characterised in that the reservoir (46) is displaceable out of the latch (66, 84) into a further position for displacement into its mounting position.

3. Arrangement of a reservoir according to claim 1 or 2, characterised in that the reservoir (46) is suspended positively guided in the direction of the longitudinal central axis on the pivot (78).

4. Arrangement of a reservoir according to one or more of the preceding claims, characterised in that the reservoir (46) is slidable in the direction towards the standing surface of the vehicle (10) or away therefrom.

5. Arrangement of a reservoir according to one or more of the preceding claims, characterised in that the pivot (78) is rot at able for displacement of the reservoir (46).

6. Arrangement of a reservoir according to one or more of the preceding claims, characterised in that the pivot (78) is provided with threads (110) and the reservoir (46) engages on the pivot (78) by way of a correspondingly formed complementary thread.

7. Arrangement of a reservoir according to one or more of the preceding claims, characterised in that the pivot (78) can be secured against rotation.

8. Arrangement of a reservoir according to one or more of the preceding claims, characterised in that the reservoir (46) engages on the pivot (78) by way of a carrier (132, 134, 146, 52) permitting the sliding movement.

9. Arrangement of a reservoir according to one or more of the preceding claims, characterised in that the carrier (132, 134, 146, 52) is formed angularly with two arms (134, 132, 146), whereof one arm (134) serves for connection with the reservoir (46) itself.

10. Arrangement of a reservoir according to one or more of the preceding claims, characterised in that the arm (134) receiving the reservoir (46) is formed as cladding for the reservoir (46).

11. Arrangement of a reservoir according to one or more of the preceding claims, characterised in that the carrier (132, 134, 146, 52) comprises a tray (134) and a first end part (132), wherein the tray (134) receives the reservoir (46) therein, the first end part (132) engages on the pivot (78) by way of a guide element (146) and a second end part (130) is provided whereby the tray (134) can be connected to the vehicle (10).

12. Arrangement of a reservoir according to one or more of the preceding claims, characterised in that the guide element (146) consists of a profiled bar (146) with a guide path (150) and a fixing element (128) engaging therein and selectively fixable to the vehicle (10).

13. Arrangement of a reservoir according to one or more of the preceding claims, characterised in that the latch (66, 84) consists of two yokes (66, 84) with U-form cross section, which engage in fixed position on the vehicle (10) and in whose inner space flanked by the respective arms (68, 88) the reservoir (46) is partially slidable.

14. Arrangement of a reservoir according to one or more of the preceding claims, characterised in that the profiled bar (146) is connected at its upper end with a tongue (154) having a threaded bore (152), the pivot (78) is formed as a threaded rod and can be screwed into the threaded bore (152), the threaded rod (78) is rotatably suspended in support yokes (86, 94) on the vehicle (10) and the fixing element (128) consists of a locking screw which engages at a head end in the guideway (150) and is fixable by means of a nut (106) at the opposite end to a bracket (118), the bracket (118) being pivotal relative to the support yoke (86, 94) by way of a screw (102) whose longitudinal central axis runs coaxially to the longitudinal central axis of the pivot (78).

15. Arrangement of a reservoir according to one or more of the preceding claims, characterised in that the reservoir (46) is an auxiliary fuel reservoir for a main fuel reservoir (164) and is connected constantly in series therewith.

16. Arrangement of a reservoir according to one or more of the preceding claims, characterised in that the auxiliary fuel reservoir (46) can be filled by way of the main fuel reservoir (164).

17. Arrangement of a reservoir according to one or more of the preceding claims, characterised in that the main fuel reservoir (164) can be emptied by way of the auxiliary fuel reservoir (46).

18. Arrangement of a reservoir according to one or more of the preceding claims, characterised in that the auxiliary fuel reservoir (46) has a tank transducer (188) with one electrical resistance and the main fuel reservoir (164) has a tank transducer (174) with another electrical resistance.

19. Arrangement of a reservoir according to one or more of the preceding claims, characterised in that the auxiliary fuel reservoir (46) is arranged below the main fuel reservoir (164).

**Revendications**

1. Disposition d'un réservoir sur un véhicule, lequel réservoir peut passer d'une position de fonctionnement a une position de montage en pivotant autour d'un axe central longitudinal d'un appui (78), caractérisée en ce que le réservoir (46) est disposé de façon à pouvoir être déplacé dans la direction de l'axe central longitudinal.

2. Disposition d'un réservoir selon la revendication 1, le réservoir (46) étant maintenu dans sa position de fonctionnement au moyen d'un verrouillage (66, 84), caractérisée en ce que le réservoir (46) peut être amené dans une autre position, pour le passage dans sa position de montage en se dégageant du verrouillage (66, 84).

3. Disposition d'un réservoir selon la revendication 1 ou 2, caractérisée en ce que le réservoir (46) est suspendu sur l'appui (78) de façon à subir un guidage forcé dans la direction de l'axe central longitudinal.

4. Disposition d'un réservoir selon une ou plusieurs des revendications précédentes, caractérisée en ce que le réservoir (46) peut être rapproché ou éloigné du plan d'appui du véhicule (10).

5. Disposition d'un réservoir selon une ou plusieurs des revendications précédentes, caractérisée en ce que l'appui (78) peut tourner pour le déplacement en translation du réservoir (46).

6. Disposition d'un réservoir selon une ou plusieurs des revendications précédentes, caractérisée en ce que l'appui (78) comporte un filetage (110), et en ce que le réservoir (46) est appliqué à l'appui (78) par l'intermédiaire d'un taraudage complémentaire de conformation correspondante.

7. Disposition d'un réservoir selon une ou plusieurs des revendications précédentes, caractérisée en ce que l'appui (78) est immobilisé en rotation.

8. Disposition d'un réservoir selon une ou plusieurs des revendications précédentes, caractérisée en ce que le réservoir (46) est appliqué à l'appui (78) par l'intermédiaire d'un support (132, 134, 146, 52) autorisant le mouvement de translation.

9. Disposition d'un réservoir selon une ou plusieurs des revendications précédentes, caractérisée en ce que le support (132, 134, 146, 52) a une conformation angulaire avec deux branches (134, 132, 146), une branche (134) assurant la liaison avec le réservoir (46) lui-même.

10. Disposition d'un réservoir selon une ou plusieurs des revendications précédentes, caractérisée en ce que la branche (134) recevant le réservoir (46) est conformée en capotage pour le réservoir (46).

11. Disposition d'un réservoir selon une ou plusieurs des revendications précédentes, caractérisée en ce que le support (132, 134, 146, 52) comporte une cuvette (134) et une première partie terminale (132), la cuvette (134) recevant en son intérieur le réservoir (46), la première partie terminale (132) étant aplliquée, par l'intermédiaire d'un élément de guidage (146), à l'appui (78) et une seconde partie terminale (130) permettant de relier la cuvette (134) au véhicule (10) étant prévue.

12. Disposition d'un réservoir selon une ou plusieurs des revendications précédentes, caractérisée en ce que l'élément de guidage (146) comprend une barre profilée (146) avec une glissière de guidage (150) et un élément de retenue (128) pouvant être fixé à volonté au véhicule (10), qui s'y engage.

13. Disposition d'un réservoir selon une ou plusieurs des revendications précédentes, caractérisée en ce que le verrouillage (66, 84) comprend deux étriers (66, 84) de section droite en U qui sont appliqués en position fixe au véhicule (10) et dans l'intervalle compris entre des branches correspondantes (68, 88) desquels le réservoir (46) peut être inséré partiellement.

14. Disposition d'un réservoir selon une ou plusieurs des revendications précédentes, caractérisée en ce que la barre profilée (146) est reliée à une extrémité supérieure à une patte (154) comportant un alésage taraudé (152), en ce que l'appui (78) se présente sous la forme d'une broche filetée et peut être vissé dans l'alésage taraudé (152), en ce que la broche filetée (78) est accrochée de façon à pouvoir tourner au véhicule (10) dans des étriers de fixation (86, 94), et en ce que l'élément de retenue (128) est constitué par un boulon brut à tête bombée et collet carré qui s'engage par une extrémité côté tête dans la glissière de guidage (150) et peut être fixé par l'extrémité opposée sur une cornière (118) au moyen d'un écrou (106), la cornière (118) pouvant pivoter par rapport à l'étrier de fixation (86, 94) grâce à une vis (102) dont l'axe central longitudinal s'étend coaxialement par rapport à l'axe central longitudinal de l'appui (78).

15. Disposition d'un réservoir selon une ou plusieurs des revendications précédentes, caractérisée en ce que le réservoir (46) est un réservoir d'essence supplémentaire complétant un réservoir d'essence principal (164) et est constamment monté en série avec lui.

16. Disposition d'un réservoir selon une ou plusieurs des revendications précédentes, caractérisée en ce que le réservoir d'essence supplémentaire (46) peut être rempli par l'intermédiaire du réservoir d'essence principal (164).

17. Disposition d'un réservoir selon une ou plusieurs des revendications précédentes, caractérisée en ce que le réservoir d'essence principal (164) peut être vidé par l'intermédiaire du réservoir d'essence supplémentaire (46).

18. Disposition d'un réservoir selon une ou plusieurs des revendications précédentes, caractérisée en ce que le réservoir d'essence supplémentaire (46) comporte un transmetteur de niveau d'essence (188) ayant une résistance électrique, et en ce que le réservoir d'essence principal (164) comporte un transmetteur de niveau d'essence (174) ayant une autre résistance électrique.

19. Disposition d'un réservoir selon une ou plusieurs des revendications précédentes, caractérisée en ce que le réservoir d'essence supplémentaire (46) est placé au-dessous du réservoir d'essence principal (164).

10
32
18
30
28
26
20
34
22
24
38
40
42
36
46
48
44
50
52
12
16
14

FIG. 1

FIG. 2
48
72
58
64
54
70
68
66
62
56
144
60
142
140
136
138
130
160
162
158
86
74
108
90
82
80
84
70
88
152
154
50
82
150
110
148
78
146
46
116
94
104
98
114
112
92
156
124
106
126
128
102
122
118
134
100
96
120
76
132
52

FIG. 3
190
176
202
200
198
196
194
166
168
170
172
178
192
174
164
184
186
180
182
188
46